# EUROPEAN PATENT APPLICATION

(11) **EP 2 003 625 A1**
(43) Date of publication of application: **17.12.2008**
(21) Application number: 08008863.6
(22) Date of filing: 13.05.2008
(51) Int. Cl.: G07F 7/10, G06F 21/00

(54) **Internet business security system**

(30) Priority: 14.05.2007 TW 96117092
(71) Applicant: Chiu, Yeong How, Fu Hsin Road Keelung City 203 (TW)
(72) Inventor: Chiu, Yeong How, Fu Hsin Road Keelung City 203 (TW)
(74) Representative: Becker, Eberhard

(57) **Abstract**

An Internet business security system is disclosed. The business security system couples with a certificate issuer. The certificate issuer issues a smart card to a user. The system includes a reading apparatus for reading the smart card and generating a one-time password based on a PIN number of the user, a front process apparatus to receive the one-time password and providing service to the user when the one-time password is correct, and a rear process apparatus coupling with the front process apparatus. The rear process apparatus includes a pre-proof module to process the matter of proving the identification of the user and an authorization module to determine whether or not the one-time password is correct and then to authorize the user private data stored in the certificate issuer to a web site when the one-time password is correct.

## Description

### BACKGROUND OF THE INVENTION

### Field of Invention

The invention relates to a business security system and, in particular, to an Internet business security system.

### Related Art

It is not necessary to dialog face to face for seller and buyer in electronic commerce. Therefore, for promote the business security, before trade, the buyer identification is always checked first. After the buyer identification is proved, this buyer is required to take the next trade step, such as to provide the credit card number.

However, because all information transmission is through Internet in the electronic commerce, a hacker can steal this personal information and use this information to login to another website to buy goods. Such business risks limit the development of electronic commerce.

Therefore, it is an object to improve the business security in electronic commerce.

### SUMMARY OF THE INVENTION

An objective of the invention is to provide an Internet business security system that can identify the buyer.

An Internet business security system is disclosed. The business security system couples with a certificate issuer who issues a smart card to a user. The system includes a smart card reading apparatus to read the smart card and generate a one-time password based on a PIN number of the user, a front process apparatus to receive the one-time password and provide service to the user when the one-time password is correct, and a rear process apparatus to couple with the front process apparatus. The rear process apparatus includes a pre-proof module to process the matter of proving the identification of the user and an authorization module to determine whether or not the one-time password is correct and, if correct, then to authorize the use of the user private data stored in the certificate issuer to a web site.

### BRIEF DESCRIPTION OF THE DRAWINGS

These and other features, aspects and advantages of the invention will become apparent by reference to the following description and accompanying drawings which are given by way of illustration only, and thus are not limitative of the invention, and wherein:

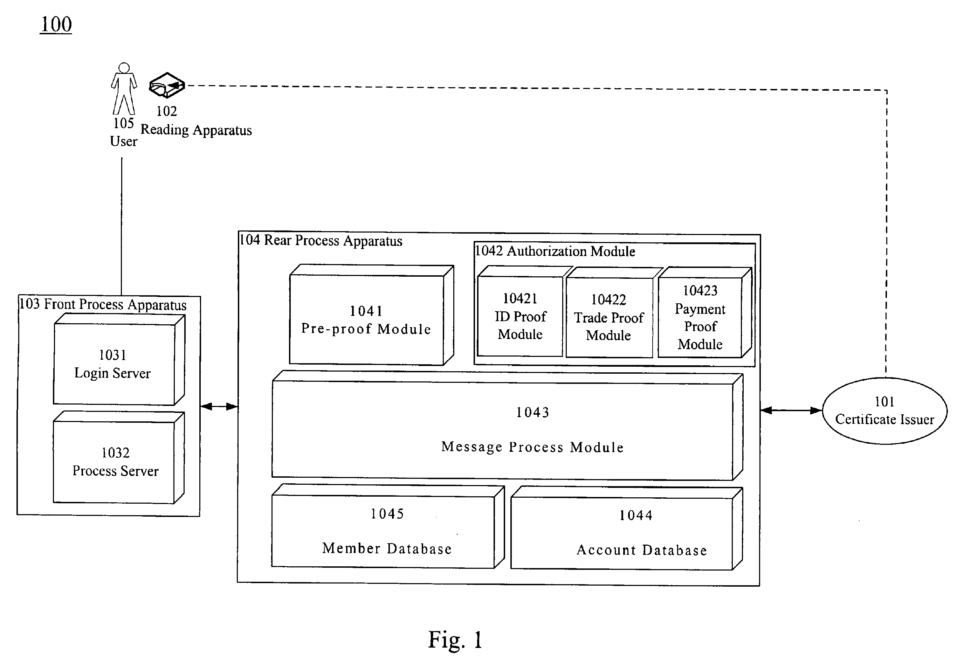

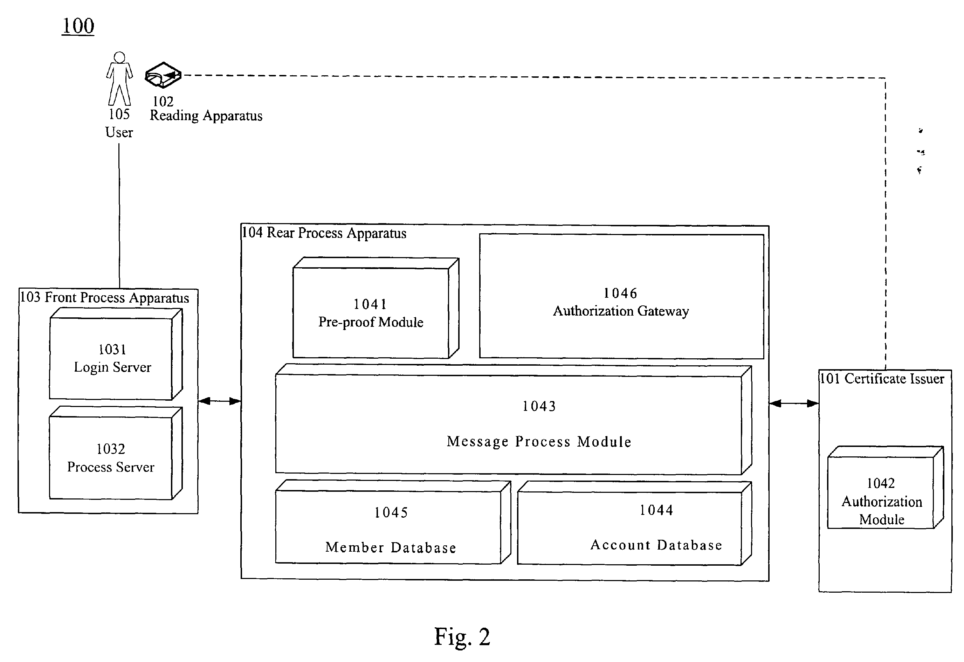

FIG. 1 and FIG. 2 are schematic views of an Internet business security system according to an embodiment of the invention.

### DETAILED DESCRIPTION OF THE INVENTION

The present invention will be apparent from the following detailed description, which proceeds with reference to the accompanying drawings, wherein the same references relate to the same elements.

According to the present invention, a smart card uses a one-time password generator to generate a one-time password to pass the validation process for a web site. In a preferred embodiment, this smart card conforms to, for example, the EMV CAP specification. However, in other embodiments, other types of cards are also used in the present invention as long as the card can be used with a corresponding generator to generate a one-time password. The card is, such as, a bank cash card, a bank credit card, a prepaid card, a mobile phone SIM card. In an embodiment, when the card is a mobile phone SIM card, the mobile phone serves as a one-time password generator that works with the SIM card to generate a one-time password. The present invention utilizes the EMV CAP smart card to implement the following embodiment. The EMV CAP smart card includes an IC chip that can perform both calculations and memory functions. Therefore, in addition to store data, this smart card also can process data and decode/encode data to protect data.

FIG. 1 is a schematic view of an Internet business security system according to an embodiment of the invention. The system includes a certificate issuer 101, a reading apparatus 102, a front process apparatus 103 and a rear process apparatus 104. In an embodiment, the certificate issuer 101, for example, is a bank, a communication company or a party for issuing a card. The reading apparatus 102 is an online or offline generator that works with the card to generate a one-time password. In a preferred embodiment, the reading apparatus 102 is an offline generator that works with EMV CAP smart card to generate a one-time password. The certificate issuer 101 either sells or gives the reading apparatus 102 to a user.

The front process apparatus 103 further includes a login server 1031 and a process server 1032. The login server 1031 processes the login process of a user 105 and works with the rear process apparatus 104 to match the virtual ID that the user 105 uses in Internet to a real ID that the user 105 registers in the certificate issuer 101. Then, the rear process apparatus 104 proves the ID and authorizes a trade or payment to a website. The process server 1032 processes the matter related to a website. For example, when the website is an electronic commerce website, the process server 1032 processes the following trade process after a user successfully logs in to the login server 1031. In an embodiment, the following trade process is, for example, to select goods, to calculate the amount of money and so on. In another embodiment, when the website is a search website, the process server 1032 processes a search requirement after a user successfully logs in to the login server 1031 and issues a search requirement. In other words, the business security system can work with any type of website. According to this embodiment, the user 105 uses the reading apparatus 102 to work with EMV CAP smart card to generate a one-time password. Then, the one-time password is sent to the front process apparatus 103 and the rear process apparatus 104 to verify for further trading.

The rear process apparatus 104 includes a pre-proof module 1041, an authorization module 1042, a message process module 1043 and two databases, an account database 1044 and a member database 1045.

The message process module 1043 transmits the message between the front process apparatus 103 and the rear process apparatus 104, and between the rear process apparatus 104 and the certificate issuer 101, and among the modules of the rear process apparatus 104.

The pre-proof module 1041 processes the matter of proving the identification of the user 105 and determines whether or not the user 105 is a member of the website based on the records of the member database 1045. The login data of the login server 1031 or the processed data of the process server 1032 is sent to the pre-proof module 1041 through the message process module 1043. The pre-proof module 1041 extracts necessary data from the member database 1045 to process a verifying process based on the login data or the processed data. For example, the necessary data is the data for processing the one-time password. In an embodiment, the pre-proof module 1041 extracts the "User Key" from the member database 1045 to verify the one-time password. In other embodiment, the "User Key" stores in the certificate issuer 101 or in a party authorized by the certificate issuer 101, or using a "Master Key" of the one-time password to work with a diversified procedure and the necessary data to generate the "User Key". On the other hand, in another embodiment, the necessary data is the data when using the user data stored in the member database 1045 to get the "User Key" of the one-time password. For example, the data is the index to get the "User Key" or the parameters to be calculated with the diversified procedure.

Next, the necessary data is sent to authorization module 1042 to perform a proof process. In an embodiment, the user 105 uses the reading apparatus 102 to work with the EMV CAP smart card to generate a one-time password. For example, the user 105 inputs a personal identification number into the reading apparatus 102 to work with the data stored in the chip in the smart card to generate a one-time password. In other embodiments, the login server 1031 generates a login number. The user 105 inputs the personal identification number and the login number to the reading apparatus 102 to work with the data stored in the chip in the smart card to generate a one-time password. Then, the login data includes the one-time password is sent to the pre-proof module 1041 and the authorization module 1042 for verification. Because the one-time password is changed every login, the authorization module 1042 calculates the one-time password with a negotiated formula every time a user logs in to verify the identity of the user 105.

The authorization module 1042 authorizes the user ID, the trade or the payment. Therefore, the authorization module 1042 at least includes an ID proof module 10421, a trade proof module 10422 or a payment proof module 10423. In an embodiment, the ID proof module 10421, the trade proof module 10422 or the payment proof module 10423 can be integrated together to be a multifunction proof module. The authorization module 1042 is built in the rear process apparatus 104, or in the certificate issuer 101, or in a party authorized by the certificate issuer 101.

According to the preferred embodiment, after the ID proof module 10421 verifies the one-time password, the ID proof module 10421 authorizes the use of the private data of the user 105 recorded in the certificate issuer 101 to the process server 1032 and the login record is recorded in the account database 1044. The authorizing message and recording message are sent to the process server 1032 through the message process module 1043. Therefore, based on the mapping between the virtual ID that the user 105 logins and the real ID that the user 105 registers in the certificate issuer 101, the process server 1032 can recognize the virtual ID of the user 105 ,and the user 105 can be really identified.

When the user 105 finishes a trade and wants to check out, the trade proof module 10422 or the payment proof module 10423 can prove the check out process. In an embodiment, the user 105 uses the reading apparatus 102 to work with the EMV CAP smart card to generate a one-time password to process the payment. To have the one-time password, in an embodiment, the user 105 inputs the personal identification number to the reading apparatus 102 to work with the data stored in the chip in the smart card to generate a one-time password, in another embodiment, a process server 1032 generates a code, such as a Digital Signature, based on the time, amount or goods in the trade. This code is transferred to the user 105 for further identification. For example, the user 105 inputs the personal identification number and the code to the reading apparatus 102 to work with the data stored in the chip in the smart card to generate a one-time password. In this case, the code has to be transmitted to the authorization module 1042. In another embodiment, the code and the one-time password serve as an activation code of a digital content.

Next, the one-time password and a notification about the trade are sent to the pre-proof module 1041, the trade proof module 10422 or the payment proof module 10423 through the message process module 1043 to match the real ID of the user 105. When the trade proof module 10422 or the payment proof module 10423 verifies the one-time password, the trade is authorized if the one-time password is correct. In another embodiment, when the trade proof module 10422 or the payment proof module 10423 verifies the one-time password, the payment capacity of the user 105 is verified first and then the trade is authorized if the one-time password is correct. The trade data or the payment data is recorded in the account database and transmitted to the process server 1032 through the message process module 1043. It is noticed that, in this embodiment, the certificate issuer 101 authorizes the authorization module 1042 to perform the authorization process. In other words, the certificate issuer 101 communicates with the rear process apparatus 104 periodically or non-periodically to renew the data updated in the certificate issuer 101.

In another embodiment, as shown in the figure 2, the authorization module 1042 is built in the certificate issuer 101 to perform the authorization process. Therefore, the communication between the rear process apparatus 104 and the certificate issuer 101 is through the authorization gateway 1046.

Accordingly, the business security system of the present invention can match the virtual ID in the Internet to the real ID recorded in the certificate issuer when a user logs into the system or when a user finishes a trade. Therefore, the virtual ID that the user used in the Internet can link to the real account of the user. Moreover, the certificate issuer can verify the user credit line. Therefore, the user payment capacity is checked to ensure he/she can trade.

While the invention has been described by way of example and in terms of the preferred embodiment, it is to be understood that the invention is not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. An Internet business security system, wherein the business security system couples with a certificate issuer, the system comprises:
a reading apparatus for reading a smart card and generating a one-time password, wherein the smart card is issued by the certificate issuer to a user based on a user data of the user;
a front process apparatus for transmitting an await check data for proving the one-time password and receiving a process data for the one-time password, and
when the one-time password is correct, a service is provided to the user, wherein the await check data cannot link to the user data, or the await check data is not the data necessary to verify the one-time password; and
a rear process apparatus coupling with the front process apparatus to receive the await check data, wherein the rear process apparatus comprises:
a pre-proof module to process the await check data to generate a necessary data for verifying the one-time password; and
an authorization module authorized by the certificate issuer to determine whether or not the one-time password is correct.

2. The system of claim 1, wherein the smart card is a payment certification.

3. The system of claim 1, wherein the authorization module further comprises:
an identification proof module to determine whether or not the one-time password is correct and to requires the certificate issuer or a party authorized by the certificate issuer to authorize the use of the user data when the one-time password is correct; or
a trade proof module to determine whether or not the one-time password is correct and to require the certificate issuer or a party authorized by the certificate issuer to authorize to perform a trade process based on the user data when the one-time password is correct; or
a payment proof module to determine whether or not the one-time password is correct and to require the certificate issuer or a party authorized by the certificate issuer to authorize to perform a payment process based on the user data when the one-time password is correct.

4. The system of claim 1, wherein the front apparatus further comprises:
a login server to process a login of using the one-time password and to transmit the await check data for proving the one-time password to the rear process apparatus; or
a process server to provide a service.

5. The system of claim 1, wherein the rear process apparatus further comprises:
an account database for storing a data of login, trading or payment; or
a member database for storing a data of member.

6. The system of claim 1, wherein the rear process apparatus further comprises a message process module to communicate messages between the front process apparatus and the rear process apparatus.

7. An Internet business security system, wherein the business security system couples with a certificate issuer, the system comprises:
a reading apparatus for reading a smart card and generating a one-time password, wherein the smart card is issued by the certificate issuer to a user based on a user data of the user;
a front process apparatus for transmitting an await check data for proving the one-time password and receiving a process data for the one-time password, and
when the one-time password is correct, a service is provided to the user, wherein the await check data cannot link to the user data, or the await check data is not the data necessary to verify the one-time password; and
a rear process apparatus coupling with the front process apparatus to receive the await check data, wherein the rear process apparatus comprises:
a pre-proof module to generate a necessary data for verifying the one-time password; and
at least one authorization gateway to transmit the necessary data to the certificate issuer or a party authorized by the certificate issuer to determine whether or not the one-time password is correct, and when the one-time password is correct, the authorization gateway requires the certificate issuer or the party authorized by the certificate issuer to authorize the use of the user data stored in the certificate issuer, or to authorize to perform a trade process based on the user data, or to authorize to perform a payment process based on the user data.

8. The system of claim 7, wherein the smart card is a payment certification.

9. The system of claim 7, wherein the front apparatus further comprises:
a login server to process a login of using the one-time password and to transmit the await check data for proving the one-time password to the rear process apparatus; or
a process server to provide a service.

10. The system of claim 7, wherein the rear process apparatus further comprises:
an account database for storing a data of login, trading or payment; or
a member database for storing a data of member.

11. The system of claim 7, wherein the rear process apparatus further comprises a message process module to communicate messages between the front process apparatus and the rear process apparatus.

12. An Internet business security system, the system comprises:
a certificate issuer to issue a smart card to a user based on a user data of the user;
a reading apparatus for reading the smart card and generating a one-time password;
a web-site for transmitting an await check data for proving the one-time password and receiving a process data for the one-time password, and when the one-time password is correct, a service is provided to the user, wherein the await check data cannot link to the user data, or the await check data is not the data necessary to verify the one-time password;
a pre-proof module coupling with the web-site to process the await check data to generate a necessary data for verifying the one-time password; and
at least one authorization module coupling with the certificate issuer or a party authorized by the certificate issuer to determine whether or not the one-time password is correct.

13. The system of claim 12, wherein the smart card is a payment certification.

14. The system of claim 12, wherein the authorization module further comprises:
an identification proof module to determine whether or not the one-time password is correct and to require the certificate issuer or a party authorized by the certificate issuer to authorize the use of the user data when the one-time password is correct; or
a trade proof module to determine whether or not the one-time password is correct and to require the certificate issuer or a party authorized by the certificate issuer to authorize to perform a trade process based on the user data when the one-time password is correct; or
a payment proof module to determine whether or not the one-time password is correct and to require the certificate issuer or a party authorized by the certificate issuer to authorize to perform a payment process based on the user data when the one-time password is correct.

15. An Internet business security system, the system comprises:
a certificate issuer to issue a smart card to a user based on a user data of the user;
a reading apparatus for reading the smart card and generating a one-time password;
a web-site for transmitting an await check data for proving the one-time password and receiving a process data for the one-time password, and when the one-time password is correct, a service is provided to the user, wherein the await check data cannot link to the user data, or the await check data is not the data necessary to verify the one-time password;
a pre-proof module coupling with the web-site to process the await check data to generate a necessary data for verifying the one-time password; and
at least one authorization gateway coupling with the certificate issuer or a party authorized by the certificate issuer to transmit the necessary data to the certificate issuer or a party authorized by the certificate issuer to determine whether or not the one-time password is correct, and when the one-time password is correct, the authorization gateway requires the certificate issuer or the party authorized by the certificate issuer to authorize the use of the user data stored in the certificate issuer, or to authorize to perform a trade process based on the user data, or to authorize to perform a payment process based on the user data.

16. The system of claim 15, wherein the smart card is a payment certification.
